(19) Europäisches Patentamt
European Patent Office
Office européen des brevets

(11) **EP 4 582 290 A1**

(12) **EUROPEAN PATENT APPLICATION**
published in accordance with Art. 153(4) EPC

(43) Date of publication:
**09.07.2025 Bulletin 2025/28**

(21) Application number: **22960220.6**

(22) Date of filing: **30.09.2022**

(51) International Patent Classification (IPC):
**B60L 7/10** (2006.01)   **B60T 1/10** (2006.01)

(52) Cooperative Patent Classification (CPC):
**B60L 7/10; B60T 1/10**

(86) International application number:
**PCT/CN2022/123047**

(87) International publication number:
**WO 2024/065592 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **LI, Yuhao
Shenzhen, Guangdong 518129 (CN)**

• **SUN, Long
Shenzhen, Guangdong 518129 (CN)**
• **GUO, Zhenhua
Shenzhen, Guangdong 518129 (CN)**
• **MAO, Dongxu
Shenzhen, Guangdong 518129 (CN)**
• **WANG, Wei
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **VEHICLE CONTROL METHOD AND APPARATUS**

(57)    A vehicle control method and apparatus are provided, and relate to the field of electric vehicle technologies. The method includes: calculating a first energy recovery torque based on a first traveling parameter of a vehicle, where the first traveling parameter includes a yaw velocity; and controlling, based on the first energy recovery torque, the vehicle to perform energy recovery. The method helps ensure traveling safety of the vehicle and driving experience.

FIG. 3

## Description

### TECHNICAL FIELD

This application relates to the field of vehicle technologies, and in particular, to a vehicle control method and apparatus.

### BACKGROUND

Currently, air pollution is serious, haze is frequent, and environmental protection issues attract wide attention. Therefore, countries attach importance to development of electric vehicles (Electric Vehicles, EVs). Usually, energy utilization of the EV is improved through energy recovery, to resolve a problem of an endurance mileage of the EC.

However, in some current designs, when energy recovery is performed in some scenarios, a rear axle of the EV is prone to sideslip, or the EV is prone to drift, causing traveling safety issues. In some other designs, when a sideslip or drift occurs, an electronic stability control system (electronic stability control system, ESC) of the EV triggers correction, and the ESC requires a vehicle control unit (vehicle control unit, VCU) or a vehicle domain controller (vehicle domain controller, VDC) to exit braking energy recovery. However, the EV "jerks forward" due to the control operation.

Therefore, how to ensure traveling safety of a vehicle and driving experience in an energy recovery solution is still an important problem that needs to be urgently resolved.

### SUMMARY

This application provides a vehicle control method and apparatus, to help ensure traveling safety of a vehicle and driving experience.

According to a first aspect, an embodiment of this application provides a vehicle control method. The method may be performed by a vehicle control apparatus. The vehicle control apparatus may be deployed on a vehicle side, for example, a vehicle control unit (vehicle control unit, VCU) or a vehicle domain controller (vehicle domain controller, VDC) of a vehicle. A product form of the vehicle control apparatus is not limited in embodiments of this application. The vehicle may be a two-wheel drive electric vehicle, or may be a four-wheel drive electric vehicle. The vehicle may use a rear-wheel drive motor as a primary recovery motor, configured for the vehicle to perform energy recovery. For example, the primary recovery motor of the vehicle may be a permanent-magnet synchronous motor. In a scenario of a four-wheel drive electric vehicle, the vehicle may include the rear-wheel drive motor (for example, denoted as a first motor) and a front-wheel drive motor (for example, a second motor). The vehicle control apparatus may calculate an energy recovery torque of at least one motor of the vehicle by using the method in this embodiment of this application, to control the vehicle to perform energy recovery.

The method may include: calculating a first energy recovery torque based on a first traveling parameter of the vehicle, where the first traveling parameter includes a yaw velocity; and controlling, based on the first energy recovery torque, the vehicle to perform energy recovery.

According to the method, the vehicle control apparatus may calculate an energy recovery torque in real time based on a traveling parameter, for example, the yaw velocity, to dynamically limit capability recovery intensity of the vehicle, to reduce or even avoid a tendency toward instability (for example, a sideslip or drift) when the vehicle performs energy recovery in some special scenarios (for example, a cornering scenario). This ensures traveling safety of the vehicle. In addition, based on the method, correction, performed by an ESC, triggered due to instability of the vehicle can be further reduced, to prevent the vehicle from "jerking forward", to ensure driving experience.

With reference to the first aspect, in a possible design, the method further includes: determining that the vehicle meets at least one of the following first activation conditions: The yaw velocity of the vehicle is greater than or equal to a first value; a speed of the vehicle is greater than or equal to a second value; or a value of braking force request information of the vehicle is greater than or equal to a third value.

According to the method, the vehicle control apparatus may be configured with a dynamic energy recovery function, and monitor a related traveling parameter of the vehicle in real time, to determine whether the dynamic energy recovery function needs to be activated, so that after the dynamic energy recovery function is activated, an energy recovery torque is dynamically adjusted, to dynamically limit the capability recovery intensity of the vehicle.

With reference to the first aspect, in a possible design, the first traveling parameter includes the speed, and the calculating a first energy recovery torque based on a first traveling parameter of the vehicle includes: calculating a first intervention value based on the yaw velocity and the speed; and calculating the first energy recovery torque based on the first intervention value.

According to the method, the vehicle control apparatus may be configured to flexibly calculate the first energy recovery torque, for example, calculate the first intervention value to calculate the first energy recovery torque.

With reference to the first aspect, in a possible design, the first traveling parameter includes the braking force request information, and the calculating a first energy recovery torque based on a first traveling parameter of the vehicle includes: calculating a second intervention value based on the braking force request information and the speed; and calculating the first energy recovery torque based on the second intervention value. For example, the braking force request information may include braking pedal position percentage information.

According to the method, the vehicle control apparatus may be configured to flexibly calculate the first energy recovery torque, for example, calculate the second intervention value to calculate the first energy recovery torque.

With reference to the first aspect, in a possible design, the calculating a first energy recovery torque based on a first traveling parameter of the vehicle includes: calculating the first energy recovery torque based on a larger value between the first intervention value and the second intervention value.

According to the method, the vehicle control apparatus may calculate different intervention values based on different first traveling parameters, and select a large intervention value to dynamically limit energy recovery intensity of the vehicle, to prevent the vehicle from showing a tendency toward instability as much as possible.

With reference to the first aspect, in a possible design, the method may further include: obtaining a first allocation proportion of an energy recovery torque; and the controlling, based on the first energy recovery torque, the vehicle to perform energy recovery includes: calculating a second energy recovery torque based on the first energy recovery torque and the first allocation proportion; and controlling, based on the second energy recovery torque, a first motor of the vehicle to perform energy recovery.

With reference to the first aspect, in a possible design, the method may further include: calculating a third energy recovery torque based on the first energy recovery torque and a second allocation proportion, where the second allocation proportion is a difference between 1 and the first allocation proportion; and controlling, based on the third energy recovery torque, a second motor of the vehicle to perform energy recovery.

According to the method, the vehicle control apparatus may enable a dynamic allocation function, and allocate the energy recovery torque to different motors of the vehicle as required, so that the different motors separately bear some energy recovery capabilities, to optimize total energy recovery intensity of the vehicle as much as possible while the vehicle is prevented from showing the tendency toward instability, and traveling safety is ensured.

With reference to the first aspect, in a possible design, the method may further include: calculating a friction braking force based on the first energy recovery torque and a third allocation proportion, where the third allocation proportion is a difference between 1 and the first allocation proportion; and controlling pressure of a master cylinder or pressure of a wheel cylinder of the vehicle based on the friction braking force.

According to the method, the vehicle control apparatus may enable a dynamic friction braking function, and dynamically adjust the friction braking force, to control vehicle stability, thereby ensuring traveling safety of the vehicle and driving experience.

With reference to the first aspect, in a possible design, the obtaining a first allocation proportion of an energy recovery torque includes: querying the first allocation proportion from preset allocation proportion information based on a second traveling parameter of the vehicle, where the second traveling parameter includes the yaw velocity and/or a longitudinal acceleration.

According to this method, for example, the vehicle control apparatus may obtain the first allocation proportion of the energy recovery torque by using a similar method, for example, table lookup.

With reference to the first aspect, in a possible design, the method further includes: determining that the vehicle meets at least one of the following second activation conditions: The yaw velocity of the vehicle is greater than or equal to a fourth value; or the longitudinal acceleration of the vehicle is greater than or equal to a fifth value.

According to the method, the vehicle control apparatus may be configured with the dynamic allocation function, and monitor a related traveling parameter of the vehicle in real time, to determine whether the dynamic allocation function needs to be activated, so that after the dynamic allocation function is activated, energy recovery torques of the different motors are dynamically allocated, to dynamically adjust the capability recovery intensity of the vehicle.

With reference to the first aspect, in a possible design, the method further includes: when an energy recovery function is enabled, calculating a fourth energy recovery torque based on a third traveling parameter of the vehicle, where the third traveling parameter includes at least one of the following: accelerator pedal position percentage information, a state of charge SOC of a battery, the speed, a gear, a driving mode, or a road mode; and the calculating a first energy recovery torque based on a first traveling parameter of the vehicle includes: calculating the first energy recovery torque based on the first traveling parameter and the fourth energy recovery torque.

According to the method, the vehicle control apparatus can calculate the fourth energy recovery torque in real time based on traveling parameter information obtained in real time. The fourth energy recovery torque may be used as an initial energy recovery torque of the dynamic energy recovery function, so that the vehicle control apparatus can dynamically limit intensity of the energy recovery torque of the vehicle based on the fourth energy recovery torque.

With reference to the first aspect, in a possible design, the method further includes: calculating a front axle slip ratio and a rear axle slip ratio based on a fourth traveling parameter of the vehicle, where the fourth traveling parameter includes at least one of the following: a wheel speed, the speed, or an axle speed; and adjusting the first energy recovery torque based on the front axle slip ratio, the rear axle slip ratio, and a boundary value of a target slip ratio. With reference to the first aspect, in a possible design, the method may further include: determining the boundary value of the target slip ratio based on a road surface type of a road on which the vehicle is located.

According to the method, the vehicle control apparatus may adjust a to-be-output energy recovery torque based on a road surface condition of the vehicle.

According to a second aspect, an embodiment of this application provides a vehicle control apparatus. The apparatus may include: a calculation unit, configured to calculate a first energy recovery torque based on a first traveling parameter of a vehicle, where the first traveling parameter includes a yaw velocity; and a control unit, configured to control, based on the first energy recovery torque, the vehicle to perform energy recovery.

With reference to the second aspect, in a possible design, the apparatus further includes a determining unit, configured to determine that the vehicle meets at least one of the following first activation conditions: The yaw velocity of the vehicle is greater than or equal to a first value; a speed of the vehicle is greater than or equal to a second value; or a value of braking force request information of the vehicle is greater than or equal to a third value.

With reference to the second aspect, in a possible design, the first traveling parameter includes the speed, and the calculation unit is specifically configured to: calculate a first intervention value based on the yaw velocity and the speed; and calculate the first energy recovery torque based on the first intervention value.

With reference to the second aspect, in a possible design, the first traveling parameter includes the braking force request information, and the calculation unit is specifically configured to: calculate a second intervention value based on the braking force request information and the speed; and calculate the first energy recovery torque based on the second intervention value.

With reference to the second aspect, in a possible design, the calculation unit is specifically configured to calculate the first energy recovery torque based on a larger value between the first intervention value and the second intervention value.

With reference to the second aspect, in a possible design, the apparatus further includes an obtaining unit, configured to obtain a first allocation proportion of an energy recovery torque, where the control unit is specifically configured to: calculate a second energy recovery torque based on the first energy recovery torque and the first allocation proportion by using the calculation unit; and control, based on the second energy recovery torque, a first motor of the vehicle to perform energy recovery.

With reference to the second aspect, in a possible design, the control unit is further configured to: calculate a third energy recovery torque based on the first energy recovery torque and a second allocation proportion by using the calculation unit, where the second allocation proportion is a difference between 1 and the first allocation proportion; and control, based on the third energy recovery torque, a second motor of the vehicle to perform energy recovery.

With reference to the second aspect, in a possible design, the control unit is further configured to: calculate a friction braking force based on the first energy recovery torque and a third allocation proportion by using the calculation unit, where the third allocation proportion is a difference between 1 and the first allocation proportion; and control pressure of a master cylinder or pressure of a wheel cylinder of the vehicle based on the friction braking force.

With reference to the second aspect, in a possible design, the obtaining unit is specifically configured to query the first allocation proportion from preset allocation proportion information based on a second traveling parameter of the vehicle, where the second traveling parameter includes the yaw velocity and/or a longitudinal acceleration.

With reference to the second aspect, in a possible design, the apparatus further includes a determining unit, configured to determine that the vehicle meets at least one of the following second activation conditions: The yaw velocity of the vehicle is greater than or equal to a fourth value; or the longitudinal acceleration of the vehicle is greater than or equal to a fifth value.

With reference to the second aspect, in a possible design, the calculation unit is further configured to: when an energy recovery function is enabled, calculate a fourth energy recovery torque based on a third traveling parameter of the vehicle, where the third traveling parameter includes at least one of the following: accelerator pedal position percentage information, a state of charge SOC of a battery, the speed, a gear, a driving mode, or a road mode. That the calculation unit calculates a first energy recovery torque based on a first traveling parameter of the vehicle includes: calculating the first energy recovery torque based on the first traveling parameter and the fourth energy recovery torque.

With reference to the second aspect, in a possible design, the calculation unit is further configured to: calculate a front axle slip ratio and a rear axle slip ratio based on a fourth traveling parameter of the vehicle, where the fourth traveling parameter includes at least one of the following: a wheel speed, the speed, or an axle speed; and adjust the first energy recovery torque based on the front axle slip ratio, the rear axle slip ratio, and a boundary value of a target slip ratio.

With reference to the second aspect, in a possible design, the apparatus further includes a determining unit, configured to determine the boundary value of the target slip ratio based on a road surface type of a road on which the vehicle is located.

According to a third aspect, an embodiment of this application provides a communication apparatus, including a processor. The processor is coupled to a memory. The processor is configured to execute a computer program or instructions stored in the memory, to enable the apparatus to perform the method according to any one of the first aspect and the possible designs of the first aspect.

According to a fourth aspect, an embodiment of this application provides a vehicle, including a unit configured to implement the method according to any one of the first aspect and the possible designs of the first aspect.

According to a fifth aspect, an embodiment of this application provides a readable storage medium, including a program or instructions. When the program or the instruction are executed, the method according to any one of the first aspect and the possible designs of the first aspect is performed.

According to a sixth aspect, an embodiment of this application provides a computer program product. When the computer program product runs on a computer, the computer is enabled to perform the method according to any one of the first aspect and the possible designs of the first aspect.

According to a seventh aspect, an embodiment of this application provides a terminal device, including a unit configured to implement the method according to any one of the first aspect and the possible designs of the first aspect, or a unit configured to implement the method according to any one of the second aspect and the possible designs of the second aspect. For example, the terminal device includes but is not limited to: an intelligent transportation device (for example, an automobile, a boat, an uncrewed aerial vehicle, a train, or a truck), an intelligent manufacturing device (for example, a robot, an industrial device, intelligent logistics, or an intelligent factory), and an intelligent terminal (for example, a mobile phone, a computer, a tablet computer, a palmtop computer, a desktop computer, a headset, a speaker, a wearable device, or a vehicle-mounted device).

In embodiments of this application, based on the implementations according to the foregoing aspects, the implementations may be further combined to provide more implementations.

For technical effects that can be achieved by any one of the possible implementations of the second aspect to the seventh aspect, correspondingly refer to descriptions of technical effects that can be achieved by any one of the possible implementations of the first aspect and the second aspect. Repeated content is not described.

**BRIEF DESCRIPTION OF DRAWINGS**

FIG. 1 is a diagram of an application scenario to which an embodiment of this application is applicable;

FIG. 2 is a diagram of a principle of a vehicle control method according to an embodiment of this application;

FIG. 3 is a schematic flowchart of a vehicle control method according to an embodiment of this application;

FIG. 4 to FIG. 6 are schematic flowcharts of a vehicle control method in different cases according to an embodiment of this application;

FIG. 7 is a diagram of a structure of a vehicle control apparatus according to an embodiment of this application; and

FIG. 8 is a diagram of a structure of a communication apparatus according to an embodiment of this application.

**DESCRIPTION OF EMBODIMENTS**

Embodiments of this application provide a vehicle control method and apparatus, to help ensure traveling safety of a vehicle and driving experience. The method and the apparatus are based on a same technical concept. Because a problem-resolving principle of the method is similar to a problem-resolving principle of the apparatus, for implementations of the apparatus and the method, refer to each other. Repeated content is not described again. In addition, in embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

It should be noted that the vehicle driving solution in embodiments of this application may be applied to the internet of vehicles, for example, vehicle to everything (vehicle to everything, V2X), long term evolution-vehicle (long term evolution-vehicle, LTE-V), or vehicle to vehicle (vehicle to vehicle, V2V). For example, the vehicle driving solution may be applied to a vehicle having a driving movement function, or another apparatus having a driving movement function in a vehicle. The another apparatus includes but is not limited to another sensor, for example, a vehicle-mounted terminal, a vehicle-mounted controller, a vehicle-mounted module, a vehicle-mounted assembly, a vehicle-mounted component, a vehicle-mounted chip, a vehicle-mounted unit, a vehicle-mounted radar, or a vehicle-mounted camera. The vehicle may implement the vehicle driving method provided in embodiments of this application by using the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera. Certainly, the control solution in embodiments of this application may be further applied to an intelligent terminal having a movement control function other than the vehicle, or configured in an intelligent terminal having a movement control function other than the vehicle, or configured in a component of the intelligent terminal. The intelligent terminal may be an intelligent transportation device, an intelligent home device, a robot, or the like. For example, the component of the intelligent terminal includes but is not limited to an intelligent terminal or another sensor, for example, a controller, a chip, a radar, or a camera in the intelligent terminal, another component, and the like.

It should be noted that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit priorities or importance of the plurality of objects. For example, first indication information and second indication information are merely intended to distinguish between different indication information, but do not indicate that the two pieces of indication information are different in priorities, importance, or the like.

For ease of understanding, the following describes embodiments of this application with reference to the accompanying drawings.

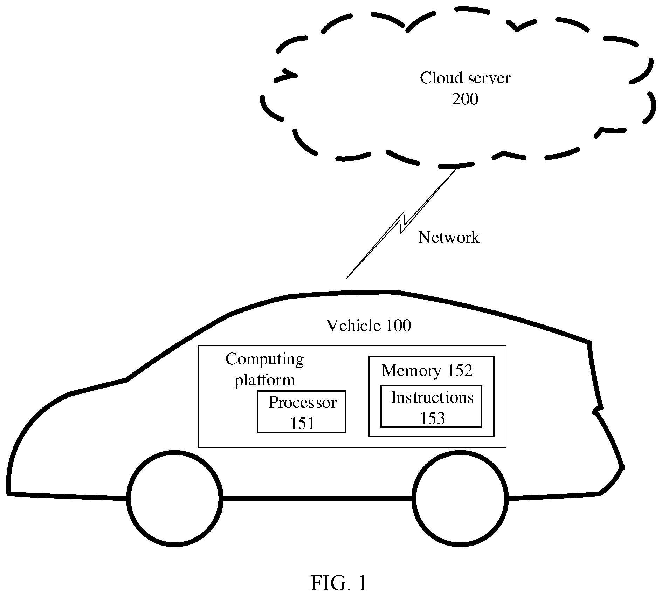

FIG. 1 is a diagram of an application scenario to which an embodiment of this application is applicable.

FIG. 1 is a diagram of an application scenario to which an embodiment of this application is applicable. In the application scenario, a vehicle 100 may be included. In a possible implementation, a cloud server 200 may be further included in the application scenario. The vehicle 100 and the cloud server 200 may communicate with each other by using a network. In an embodiment, the cloud server 200 may alternatively be implemented by using a virtual machine.

Some or all functions of the vehicle 100 are controlled by a computing platform 150 (or referred to as a computer system). The computing platform 150 may include at least one processor 151. The processor 151 may execute instructions 153 stored in a non-transitory computer-readable medium, for example, a memory 152. In some embodiments, the computing platform 150 may alternatively be a plurality of computing devices that control an individual component or a subsystem of the vehicle 100 in a distributed manner. The processor 151 may be any conventional processor, for example, a central processing unit (central processing unit, CPU). Alternatively, the processor 151 may further include, for example, a graphics processing unit (graphics processing unit, GPU), a field programmable gate array (field programmable gate array, FPGA), a system-on-a-chip (system-on-a-chip, SOC), an application-specific integrated circuit (application-specific integrated circuit, ASIC), or a combination thereof.

Optionally, the vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application. In a possible implementation, the vehicle 100 may be an electric vehicle (Electric Vehicle, EV), for example, a two-wheel drive electric vehicle or a four-wheel drive electric vehicle. This is not limited in embodiments of this application.

It should be understood that a structure of the vehicle in FIG. 1 should not be understood as a limitation on embodiments of this application.

The vehicle control method in embodiments of this application may be implemented by a vehicle control apparatus. The vehicle control apparatus may be an independent apparatus, or may be a chip or a component in the vehicle 100 shown in FIG. 1, or may be a software module, and may be deployed on a related vehicle-mounted device of the vehicle 100. A product form and a deployment manner of the vehicle control apparatus are not limited in embodiments of this application. For ease of understanding and description, the following describes the vehicle control solution in embodiments of this application by using an example in which the vehicle control apparatus is a vehicle control unit (vehicle control unit, VCU) or a vehicle domain controller (vehicle domain controller, VDC) of the computing platform 150 integrated into the vehicle 100.

The following describes an implementation principle of embodiments of this application.

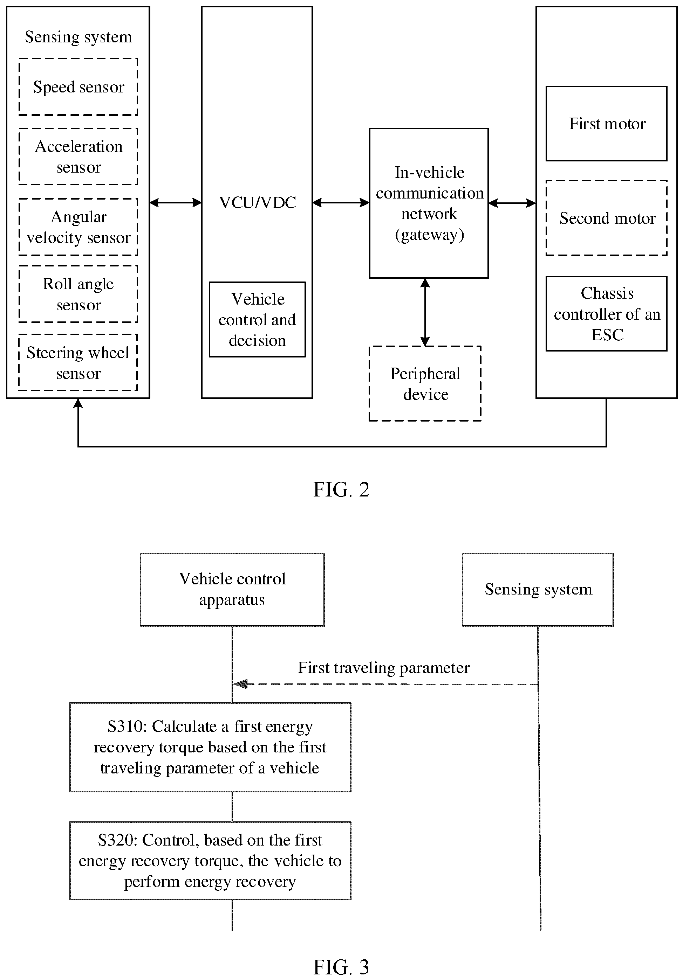

FIG. 2 is a diagram of a principle of a vehicle control method according to an embodiment of this application. Refer to FIG. 2. The VCU or the VDC may interact with another module in the vehicle, to implement the vehicle control solution.

For example, the VCU or the VDC may obtain at least one traveling parameter of the vehicle through a sensing system of the vehicle, and keep monitoring and collecting running data of the vehicle at all times. The sensing system may include but is not limited to: a speed sensor, an acceleration sensor, an angular velocity sensor, a roll angle sensor, a steering wheel sensor, and another sensor. The at least one traveling parameter obtained through the sensing system of the vehicle may include but is not limited to: a speed, a longitudinal (lateral) acceleration, a yaw velocity, a roll angle, a steering wheel angle, a heading angle, accelerator pedal position percentage information, braking pedal position percentage information, a gear, a driving mode, a road mode, a state of charge (state of charge, SOC) of a battery, or the like. The VCU or the VDC may combine various traveling parameters obtained from the sensing system, to obtain information about the vehicle and a surrounding environment. These pieces of information may be used by the VCU or the VDC for vehicle control and decision. For example, the VCU or the VDC may determine whether the vehicle currently has a security risk, for example, a sideslip or drift, and whether a dynamic control function (for example, including a dynamic energy recovery function, a dynamic friction braking function, or a dynamic allocation function) of the vehicle is activated, to provide the dynamic control function to the vehicle in a timely manner when the vehicle has a potential security risk, to ensure traveling safety of the vehicle and driving experience.

If the dynamic control function of the vehicle is activated, the VCU or the VDC may deliver a control instruction to a first motor, a second motor (optional), a chassis controller of an electronic stability control system (electronic stability control system, ESC), or the like by using an in-vehicle communication network (or a gateway), so that the first motor, the second motor (optional), or the chassis controller of the ESC assists, according to the control instruction from the VCU or the VDC, in controlling the vehicle to travel safely. This ensures traveling safety of the vehicle and driving experience.

In a possible implementation, in a process of activating the dynamic control function of the vehicle, after the dynamic control function of the vehicle is activated, the VCU or the VDC may output reminder information to a peripheral device, for example, a touchscreen or a speaker, by using the gateway, to indicate a result of vehicle control and decision to a driver, so that the driver learns of a dynamic change of the vehicle. The VCU or the VDC may further receive control information from the driver of the vehicle by using the peripheral device (or by using the gateway), for example, the touchscreen or a microphone. The control information may be associated with the reminder information, and may be used to assist the VCU or the VDC in vehicle control and decision.

It should be noted that, in FIG. 2, bidirectional arrows between different modules only indicate that the modules can communicate with each other, and do not limit any communication manner, information format, and the like. The VCU or the VDC may communicate with different modules in different communication manners or information formats. The VCU or the VDC may further have a protocol conversion function or a format conversion function. This is not limited in embodiments of this application. Other modules in the vehicle shown in FIG. 2 are merely examples. A dashed box only indicates that a corresponding module is an optional module. The vehicle may not include some modules shown in FIG. 2, or may include modules other than some modules shown in FIG. 2, or some modules in FIG. 2 are replaced with other modules not shown. Details are not described herein again. In some designs, the sensing system of the vehicle may also be integrated into the VCU or the VDC. This is not limited in embodiments of this application.

During implementation, as shown in FIG. 3, the vehicle control method may include the following steps:

S310: A vehicle control apparatus (for example, a VCU or a VDC) calculates a first energy recovery torque based on a first traveling parameter of a vehicle.

S320: Control, based on the first energy recovery torque, the vehicle to perform energy recovery.

In this embodiment of this application, the vehicle control apparatus may combine various traveling parameters obtained through a sensing system of the vehicle, keep monitoring an electronic control unit (electronic control unit, ECU) of the vehicle and a surrounding environment of the vehicle at all times, determine a scenario in which the vehicle is located, and determine whether to activate a dynamic control function of the vehicle. The dynamic control function may include but is not limited to, for example, a dynamic energy recovery function, a dynamic friction braking function, or a dynamic allocation function.

The dynamic energy recovery function may be used to dynamically limit energy recovery intensity of at least one motor of the vehicle before the vehicle shows a tendency toward instability, to avoid instability of the vehicle such as a sideslip or drift, thereby ensuring traveling safety of the vehicle and driving experience. The dynamic friction braking function may also be used to dynamically adjust a friction plate of the vehicle before the vehicle shows the tendency toward instability, to control vehicle stability, thereby ensuring traveling safety of the vehicle and driving experience. The dynamic allocation function may be used to dynamically allocate a control proportion to a related control component of a front axle or a rear axle of the vehicle before the vehicle shows the tendency toward instability, to perform overall drive control on the vehicle, thereby ensuring traveling safety of the vehicle and driving experience. Optionally, the dynamic friction braking function may also be replaced with a dynamic hydraulic braking function, and hydraulic braking compensation is performed and it is decided whether to compensate for the front axle or the rear axle, to ensure deceleration consistency of the vehicle and avoid insufficient deceleration caused by cornering of the vehicle.

During implementation, at least one activation condition may be preset in the vehicle control apparatus. In this way, in a traveling process of the vehicle, the vehicle control apparatus can comprehensively determine whether various collected traveling parameters meet corresponding activation conditions of dynamic control functions, to determine whether to activate the related dynamic control functions of the vehicle.

For example, based on a monitoring requirement, the activation conditions of the dynamic control functions of the vehicle may be conditions that are separately configured based on traveling parameters obtained in various ways and that need to be met for dynamic control, for example, a yaw velocity, a speed, braking force request information, or a longitudinal acceleration. For example, an activation condition of the dynamic energy recovery function is denoted as a first activation condition. The first activation condition may include at least one of the following: The yaw velocity of the vehicle is greater than or equal to a first value; the speed of the vehicle is greater than or equal to a second value; or a value of the braking force request information of the vehicle is greater than or equal to a third value. For another example, an activation condition of the dynamic allocation function is denoted as a second activation condition. The second activation condition may include at least one of the following: The yaw velocity of the vehicle is greater than or equal to a fourth value, or the longitudinal acceleration is greater than or equal to a fifth value. An activation condition of the dynamic friction braking function is denoted as a third activation condition. The third activation condition may be the same as the second activation condition.

Application of the dynamic control functions to the VCU or the VDC of the vehicle may be specifically configured based on hardware of the vehicle. For example, in a two-wheel drive electric vehicle, the two-wheel drive electric vehicle may include only a rear-wheel drive motor. The dynamic energy recovery function and the dynamic friction braking function in this embodiment of this application may be applied to the two-wheel drive electric vehicle, to control the two-wheel drive electric vehicle. For example, in a four-wheel drive electric vehicle, the four-wheel drive electric vehicle includes a front-wheel drive motor and a rear-wheel drive motor. At least one of the dynamic energy recovery function, the dynamic friction braking function, or the dynamic allocation function in this embodiment of this application may be applied to the four-wheel drive electric vehicle, to control the four-wheel drive electric vehicle. This is not limited in embodiments of this application.

It should be noted that, in this embodiment of this application, the preset activation condition of each dynamic control function may be manually configured, or may be obtained through calculation by using an automated tool or big data statistics. A specific implementation is not limited in embodiments of this application. In addition, this is merely an example rather than a limitation of an activation manner of the dynamic control function. In another embodiment, another activation condition or activation manner may alternatively be configured. In addition, in different activation conditions, different thresholds may be configured for the traveling parameters as required. For example, in the first activation condition, the first value for the yaw velocity may be set to 10 degrees per second (°/s); the second value for the speed may be set to 10 kilometers per hour (km/h); the braking force request information may be expressed as a percentage (%), indicating an extent to which a braking pedal is pressed (for example, manually or automatically), where 0 indicates that the braking pedal is not pressed, and 100 indicates that the braking pedal is fully pressed; and the third value for the braking force request information may be set to, for example, 40. For another example, in the second activation condition, the fourth value for the yaw velocity may be set to 5°/s, and the fifth value (an absolute value) for the longitudinal acceleration may be set to 0.05g (g represents a gravity acceleration, for example, g=9.8 meters per second (m/s)), and may be in a unit of meter per second squared ($m/s^2$).

In this embodiment of this application, if before S310 is implemented, the vehicle control apparatus determines that the vehicle meets at least one first activation condition, and enables the dynamic energy recovery function, the vehicle control apparatus may implement S310, that is, calculate the first energy recovery torque based on the first traveling parameter of the vehicle.

In this embodiment of this application, for vehicle control before the vehicle becomes unstable, in a possible implementation, the first traveling parameter may include a traveling parameter that can directly or indirectly reflect a yaw stability state of the vehicle. For example, the first traveling parameter may include the yaw velocity (yaw velocity). The yaw velocity indicates rotation of the vehicle around a vertical axis, and a magnitude of the rotation indicates a stability degree of the vehicle.

The yaw velocity may be read through a corresponding sensor (for example, an angular velocity sensor or a yaw velocity sensor). Alternatively, the yaw velocity may be obtained by calculating or processing another traveling parameter. For example, the yaw velocity of the vehicle may be obtained by calculating a derivative of a heading angle of the vehicle. Alternatively, the yaw velocity may be indirectly reflected by using at least one of the following traveling parameters: a steering wheel angle, a lateral acceleration, or a roll angle. For example, the steering wheel angle, the lateral acceleration, or the roll angle may not be in an association relationship with the yaw velocity of the vehicle, but may reflect the yaw velocity to some extent, to indicate the yaw stability state of the vehicle. For example, the steering wheel angle, the lateral acceleration, or the roll angle may be in a linear or non-linear association relationship with the yaw velocity of the vehicle. The yaw velocity may be learned of based on the steering wheel angle, the lateral acceleration, or the roll angle, and association relationships between the yaw velocity and these traveling parameters, to indicate the yaw stability state of the vehicle.

It should be understood that, this is merely an example for description rather than any limitation of the traveling parameter that directly or indirectly reflects the yaw stability state of the vehicle. In another embodiment, the specific first traveling parameter may alternatively be customized based on an application scenario, a service requirement, or the like, so that the vehicle control apparatus can more precisely utilize the yaw stability state of the vehicle for vehicle control. In addition, an association relationship between the yaw velocity and another traveling parameter (for example, the heading angle, the steering wheel angle, the lateral acceleration, or the roll angle) may be determined by a property of the traveling parameter. For example, the yaw velocity may be obtained by calculating a derivative of the heading angle. Alternatively, an association relationship between the yaw velocity and another traveling parameter (for example, the heading angle, the steering wheel angle, the lateral acceleration, or the roll angle) may be determined in advance through manual (or automated) modeling. This is not limited in embodiments of this application.

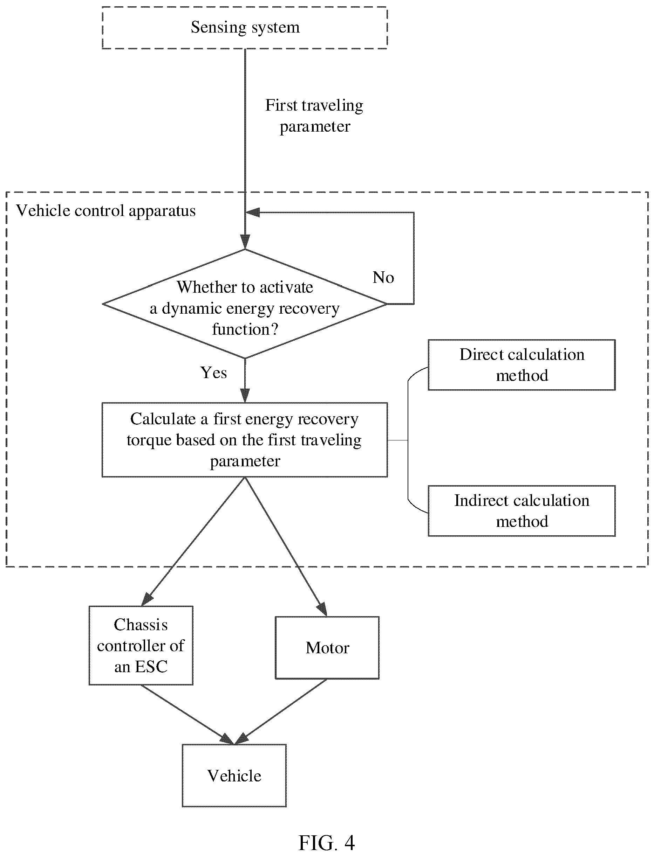

During specific implementation of S310, as shown in FIG. 4, the vehicle control apparatus may, for example, obtain the first traveling parameter from the sensing system and determine, based on the first traveling parameter, whether to activate the dynamic energy recovery function. If it is determined, based on the first traveling parameter, that the vehicle meets a corresponding first activation condition, the dynamic energy recovery function may be activated. If the vehicle does not meet the corresponding first activation condition, the dynamic energy recovery function is not activated, but whether the first traveling parameter meets the corresponding first activation condition is monitored in real time.

If the dynamic energy recovery function of the vehicle control apparatus is activated, in a possible implementation, the vehicle control apparatus may use a direct calculation method, that is, directly calculate the first energy recovery torque based on the first traveling parameter of the vehicle. In another possible implementation, the vehicle control apparatus may use an indirect calculation method, that is, indirectly calculate the first energy recovery torque based on the first traveling parameter of the vehicle. The first energy recovery torque obtained through calculation may be provided to a chassis controller of an ESC or a motor as output information of the vehicle control apparatus, to control the vehicle to perform energy recovery.

The following describes this method in detail with reference to embodiments.

I. The direct calculation method is used as an example. For example, the vehicle control apparatus may directly calculate the first energy recovery torque based on the first traveling parameter according to a formula (or referred to as a calculation expression) or through table lookup.

1. Calculation according to a formula is used as an example. In a possible implementation, the vehicle control apparatus may directly calculate the first energy recovery torque according to a preset calculation formula.

For example, if x represents the yaw velocity, and T1 represents the first energy recovery torque, a calculation formula of T1 may be shown as the following expression (1):

$$T1=\lambda*x \qquad (1)$$

Herein, $\lambda$ represents a dynamic control coefficient corresponding to the yaw velocity. $\lambda$ may be an empirical parameter, or may be obtained by performing mathematical modeling in advance. An implementation of $\lambda$ is not limited in embodiments of this application. If x is in a unit of °/s, $\lambda$ may be in a unit of (N•m•s)/°. If x is in a unit of rad/s, $\lambda$ may be in a unit of (N•m•s)/rad.

If the vehicle control apparatus already knows a value of the yaw velocity through the sensing system or a computing capability of the vehicle control apparatus, the vehicle control apparatus may substitute the value of the yaw velocity into the foregoing expression (1), to obtain the first energy recovery torque Y through direct calculation.

In another possible implementation, the first traveling parameter may further include a parameter other than the yaw velocity. Correspondingly, the foregoing expression (1) may be transformed into another expression.

For example, the first traveling parameter further includes the speed of the vehicle. The vehicle control apparatus may calculate the first energy recovery torque T1 according to the following expression (2):

$$T1=\lambda1*x+\lambda2*v \qquad (2)$$

Herein, x represents the yaw velocity, $\lambda1$ represents the dynamic control coefficient corresponding to the yaw velocity, v represents the speed, and $\lambda2$ represents a dynamic control coefficient corresponding to the speed. $\lambda1$ and $\lambda2$ may be empirical parameters, or may be obtained by performing mathematical modeling in advance. Implementations of $\lambda1$ and $\lambda2$ are not limited in embodiments of this application. If x is in a unit of °/s, $\lambda1$ may be in a unit of (N•m•s)/°. If x is in a unit of rad/s, $\lambda1$ may be in a unit of (N•m•s)/rad. If v is in a unit of km/h, $\lambda2$ may be in a unit of (N•m•h)/km. If v is in a unit of m/s, $\lambda2$ may be in a unit of N•s.

For another example, the first traveling parameter further includes the braking force request information. In the expression (2), x may be replaced with z, and $\lambda1$ may be replaced with $\lambda3$. Herein, z represents the braking force request information, and $\lambda3$ represents a dynamic control coefficient corresponding to the braking force request information. In other words, the first energy recovery torque may be calculated based on the braking force request information and the speed. $\lambda3$ may be an empirical parameter, or may be obtained by performing mathematical modeling in advance. An implementation of $\lambda3$ is not limited in embodiments of this application.

For another example, the first traveling parameter further includes the speed and the braking force request information. The vehicle control apparatus may calculate the first energy recovery torque according to the following

expression (3):

$$T1=\lambda1*x+\lambda2*v+\lambda3*z \qquad (3)$$

Herein, x represents the yaw velocity, $\lambda1$ represents the dynamic control coefficient corresponding to the yaw velocity, v represents the speed, $\lambda2$ represents the dynamic control coefficient corresponding to the speed, z represents the braking force request information, and $\lambda3$ represents the dynamic control coefficient corresponding to the braking force request information. $\lambda1$, $\lambda2$, and $\lambda3$ may be empirical parameters, or may be obtained by performing mathematical modeling in advance. Implementations of $\lambda1$, $\lambda2$, and $\lambda3$ are not limited in embodiments of this application. If x is in a unit of °/s, $\lambda1$ may be in a unit of (N•m•s)/°. If x is in a unit of rad/s, $\lambda1$ may be in a unit of (N•m•s)/rad. If v is in a unit of km/h, $\lambda2$ may be in a unit of (N•m•h)/km. If v is in a unit of m/s, $\lambda2$ may be in a unit of N•s. If z represents a braking pedal position percentage and is expressed as a percentage, $\lambda3$ may be in a unit of N•m.

The vehicle control apparatus may provide the first energy recovery torque obtained through calculation according to the foregoing expression (1), (2), or (3) to a corresponding component (for example, the motor or the chassis controller of the ESC) of the vehicle as the output information, to control the vehicle to perform energy recovery.

2. Direct calculation through table lookup is used as an example. In a possible implementation, the first traveling parameter may include the yaw velocity (for example, represented by x) and the speed (for example, represented by y) of the vehicle. The vehicle control apparatus may obtain, through direct calculation according to the following Table 1, a first energy recovery torque corresponding to (x, y).

**Table 1**

| y/x | 1 | 3 | 4 | 5 | 6 | 8 | 10 | 12 | 14 | 16 | 20 | 25 | 30 |
|---|---|---|---|---|---|---|---|---|---|---|---|---|---|
| 20 | -1550 | -1550 | -1550 | -1550 | -1550 | -1350 | -1250 | -1250 | -1150 | -1050 | -1050 | -1050 | -1050 |
| 40 | -1540 | -1540 | -1540 | -1540 | -1540 | -1240 | -1140 | -1140 | -1040 | -940 | -840 | -790 | -740 |
| 60 | -1530 | -1530 | -1530 | -1530 | -1530 | -1130 | -1030 | -1030 | -930 | -830 | -630 | -530 | -430 |
| 80 | -1520 | -1520 | -1520 | -1520 | -1520 | -1120 | -1020 | -1020 | -920 | -720 | -520 | -520 | -420 |
| 100 | -1515 | -1515 | -1515 | -1515 | -1515 | -1115 | -1015 | -1015 | -915 | -715 | -515 | -515 | -315 |
| 120 | -1510 | -1510 | -1310 | -1310 | -1310 | -910 | -810 | -810 | -710 | -510 | -510 | -510 | -310 |
| 140 | -1505 | -1505 | -1305 | -1305 | -1305 | -905 | -805 | -805 | -705 | -505 | -505 | -505 | -305 |
| 160 | -1500 | -1500 | -1300 | -1300 | -1300 | -900 | -800 | -800 | -700 | -500 | -500 | -500 | -300 |
| 180 | -1500 | -1500 | -1300 | -1300 | -1300 | -900 | -800 | -800 | -700 | -500 | -500 | -500 | -300 |

In Table 1, values of x in the first row are values of the yaw velocity of the vehicle, and may be in a unit of degree per second (°/s). Values of y in the first column are values of the speed of the vehicle, and may be in a unit of kilometers per hour (km/h). The first energy recovery torque may be a negative torque, and may be in a unit of newton•meter (N•M).

If the vehicle control apparatus already knows the value of the yaw velocity and the value of the speed through the sensing system or the computing capability of the vehicle control apparatus, the vehicle control apparatus may directly query the corresponding first energy recovery torque from Table 1. For example, if the yaw velocity is 20°/s, and the speed is 80 km/h, the first energy recovery torque is -520 N•M. During implementation of S320, the vehicle control apparatus may control, based on -520 N•M, the vehicle to perform energy recovery. For another example, if the yaw velocity is 5°/s, and the speed is 180 km/h, the first energy recovery torque is -1300 N•M. During implementation of S320, the vehicle control apparatus may control, based on -1300 N•M, the vehicle to perform energy recovery.

In another possible implementation, the first traveling parameter may include the braking force request information (for example, represented by x) and the speed (for example, represented by y) of the vehicle. The vehicle control apparatus may obtain, through direct calculation according to the following Table 2, a first energy recovery torque corresponding to (x, y).

**Table 2**

| x/y | 0 | 15 | 20 | 25 | 40 | 60 | 80 | 100 | 120 | 140 | 160 |
|---|---|---|---|---|---|---|---|---|---|---|---|
| 0 | -1550 | -1550 | -1550 | -1550 | -1550 | -1550 | -1550 | -1550 | -1550 | -1550 | -1550 |
| 10 | -1500 | -1300 | -1300 | -1200 | -1100 | -1100 | -1100 | -1100 | -1100 | -1100 | -1100 |

(continued)

| x/y | 0 | 15 | 20 | 25 | 40 | 60 | 80 | 100 | 120 | 140 | 160 |
|---|---|---|---|---|---|---|---|---|---|---|---|
| 20 | -1310 | -1210 | -1210 | -1110 | -1010 | -1010 | -1010 | -1010 | -1010 | -1010 | -1010 |
| 30 | -1220 | -1120 | -1120 | -1020 | -920 | -920 | -920 | -920 | -920 | -920 | -920 |
| 40 | -1130 | -1030 | -1030 | -930 | -830 | -830 | -830 | -830 | -830 | -830 | -830 |
| 50 | -1040 | -940 | -940 | -840 | -740 | -740 | -740 | -740 | -740 | -740 | -740 |
| 60 | -950 | -850 | -850 | -750 | -650 | -650 | -650 | -650 | -650 | -650 | -650 |
| 70 | -860 | -800 | -800 | -720 | -600 | -600 | -600 | -600 | -600 | -600 | -600 |
| 80 | -770 | -770 | -770 | -670 | -570 | -570 | -570 | -570 | -570 | -570 | -570 |
| 90 | -750 | -750 | -750 | -550 | -550 | -550 | -550 | -550 | -550 | -550 | -550 |
| 100 | -750 | -750 | -750 | -550 | -550 | -550 | -550 | -550 | -550 | -550 | -550 |

In Table 2, values of x in the first column represent the braking force request information of the vehicle, and is expressed as a percentage (%), indicating an extent to which a braking pedal is pressed (for example, manually or automatically), where 0 indicates that the braking pedal is not pressed, and 100 indicates that the braking pedal is fully pressed. Values of y in the first row are values of the speed of the vehicle, and may be in a unit of km/h. The first energy recovery torque may be a negative torque, and may be in a unit of newton•meter (N•M).

If the vehicle control apparatus already knows the value of the braking force request information and the value of the speed through the sensing system or the computing capability of the vehicle control apparatus, the vehicle control apparatus may directly query the corresponding first energy recovery torque from Table 2. For example, if the braking force request information is 20%, and the speed is 80 km/h, the first energy recovery torque is -1010 N•M. During implementation of S320, the vehicle control apparatus may control, based on -1010 N•M, the vehicle to perform energy recovery. For another example, if the braking force request information is 90%, and the speed is 160 km/h, the first energy recovery torque is -550 N•M. During implementation of S320, the vehicle control apparatus may control, based on -550 N•M, the vehicle to perform energy recovery.

It should be understood that, if the first traveling parameter includes the yaw velocity, the speed, and the braking force request information, Table 2 may be replaced with a table of correspondences between the first energy recovery torque and the yaw velocity, the speed, and the braking force request information. The corresponding first energy recovery torque is obtained through direct querying based on the yaw velocity, the speed, and the braking force request information. Details are not described herein again.

In addition, based on different vehicle components on which the first energy recovery torque acts, the vehicle control apparatus may further convert the first energy recovery torque and output the converted first energy recovery torque. For example, if the first energy recovery torque is obtained in the manner shown in Table 1, and the first energy recovery torque needs to be output to a wheel, the vehicle control apparatus may directly output the first energy recovery torque to a corresponding motor, to perform energy recovery. If the first energy recovery torque is obtained in the manner shown in Table 1, and the first energy recovery torque needs to be output to a first motor, the vehicle control apparatus may convert the first energy recovery torque (for example, divide the first energy recovery torque by a deceleration ratio (for example, 10)) and then output the converted first energy recovery torque to the first motor, and the first motor controls an axle and performs energy recovery. An implementation of an energy recovery process based on the first energy recovery torque is not limited in embodiments of this application.

II. The indirect calculation method is used as an example. For example, the vehicle control apparatus may calculate an intervention value based on the first traveling parameter according to a formula (or referred to as a calculation expression) or through table lookup, and indirectly calculate the first energy recovery torque based on the intervention value.

1. Calculation according to a formula is used as an example. In a possible implementation, the vehicle control apparatus may calculate a first intervention value based on the first traveling parameter and according to a preset formula, and calculate the first energy recovery torque based on the first intervention value.

For example, the first traveling parameter may include the yaw velocity. The vehicle control apparatus may calculate the first intervention value based on the yaw velocity, and calculate the first energy recovery torque based on the first intervention value, shown as the following expression (4) and expression (5):

$$\Delta T1 = \alpha x \qquad (4)$$

$$T1 = T0 + \Delta T1 \qquad (5)$$

Herein, $\Delta T1$ represents the first intervention value, x represents the yaw velocity, and $\alpha$ represents a dynamic intervention coefficient corresponding to the yaw velocity. $\alpha$ may be an empirical parameter, or may be obtained by performing mathematical modeling in advance. An implementation of $\alpha$ is not limited in embodiments of this application. If x is in a unit of °/s, $\alpha$ may be in a unit of (N•m•s)/°. If x is in a unit of rad/s, $\alpha$ may be in a unit of (N•m•s)/rad. T1 represents the first energy recovery torque. T0 represents an initial energy recovery torque. T0 may be a preset fixed value, or may be a preset value associated with different values of the yaw velocity, or may be an empirical value. An implementation of T0 is not limited in embodiments of this application.

In another possible implementation, the first traveling parameter may further include a parameter other than the yaw velocity. Correspondingly, the foregoing expression (4) may be transformed into another expression.

For example, the first traveling parameter further includes the speed of the vehicle. For example, the vehicle control apparatus may calculate the first intervention value based on the yaw velocity and the speed, and calculate the first energy recovery torque based on the first intervention value, shown as the following expression (6) and expression (5):

$$\Delta T1 = \alpha 1 x + \alpha 2 v \qquad (6)$$

$$T1 = T0 + \Delta T1 \qquad (5)$$

Herein, $\Delta T1$ represents the first intervention value, x represents the yaw velocity, $\alpha 1$ represents a dynamic intervention coefficient corresponding to the yaw velocity, v represents the speed, and $\alpha 2$ represents a dynamic intervention coefficient corresponding to the speed. $\alpha 1$ and $\alpha 2$ may be empirical parameters, or may be obtained by performing mathematical modeling in advance. Implementations of $\alpha 1$ and $\alpha 2$ are not limited in embodiments of this application. If x is in a unit of °/s, $\alpha 1$ may be in a unit of (N•m•s)/°. If x is in a unit of rad/s, $\alpha 1$ may be in a unit of (N•m•s)/rad. If v is in a unit of km/h, $\alpha 2$ may be in a unit of (N•m•h)/km. If v is in a unit of m/s, $\alpha 2$ may be in a unit of N•s. T1 represents the first energy recovery torque. T0 represents an initial energy recovery torque. T0 may be a preset fixed value, or may be a preset value associated with different values of the yaw velocity, or may be an empirical value. An implementation of T0 is not limited in embodiments of this application.

For another example, the first traveling parameter further includes the braking force request information of the vehicle. In a possible implementation, for example, the vehicle control apparatus may calculate a second intervention value based on the braking force request information, and calculate the first energy recovery torque based on the second intervention value, shown as the following expression (7) and expression (8):

$$\Delta T2 = \beta z \qquad (7)$$

$$T1 = T0 + \Delta T2 \qquad (8)$$

Herein, $\Delta T2$ represents the second intervention value, z represents the braking force request information, and $\beta$ represents a dynamic intervention coefficient corresponding to the braking force request information. $\beta$ may be an empirical parameter, or may be obtained by performing mathematical modeling in advance. An implementation of $\beta$ is not limited in embodiments of this application. If z represents a braking pedal position percentage and is expressed as a percentage, $\beta$ may be in a unit of N•m. T1 represents the first energy recovery torque. T0 represents an initial energy recovery torque. T0 may be a preset fixed value, or may be a preset value associated with different values of the yaw velocity, or may be an empirical value. An implementation of T0 is not limited in embodiments of this application.

For another example, the vehicle control apparatus may calculate the second intervention value based on the braking force request information and the speed, and calculate the first energy recovery torque based on the second intervention value, shown as the following expression (9) and expression (8):

$$\Delta T2 = \beta 1 z + \beta 2 v \qquad (9)$$

$$T1 = T0 + \Delta T2 \qquad (8)$$

Herein, ΔT2 represents the second intervention value, z1 may represent the braking force request information, β1 represents a dynamic intervention coefficient corresponding to the braking force request information, v represents the speed, and β2 represents the dynamic intervention coefficient corresponding to the speed. β1 and β2 may be empirical parameters, or may be obtained by performing mathematical modeling in advance. Implementations of β1 and β2 are not limited in embodiments of this application. If z represents a braking pedal position percentage and is expressed as a percentage, β1 may be in a unit of N•m. If v is in a unit of km/h, β2 may be in a unit of (N•m•h)/km. If v is in a unit of m/s, β2 may be in a unit of N•s. T1 represents the first energy recovery torque. T0 represents an initial energy recovery torque. T0 may be a preset fixed value, or may be a preset value associated with different values of the yaw velocity, or may be an empirical value. An implementation of T0 is not limited in embodiments of this application.

To improve precision of dynamic control of the vehicle, in a possible implementation, the vehicle control apparatus may calculate the first energy recovery torque by using all possible traveling parameters as the first traveling parameter.

For example, the first traveling parameter includes the yaw velocity, the speed, and the braking force request information. The vehicle control apparatus may calculate the first intervention value based on the yaw velocity and the speed, calculate the second intervention value based on the braking force request information and the speed, and calculate the first energy recovery torque based on a larger value between the first intervention value and the second intervention value, shown as the following expression (10):

$$T1=T0+\max (\Delta T1, \Delta T2) \quad (10)$$

T1 represents the first energy recovery torque. T0 represents an initial energy recovery torque. T0 may be a preset fixed value, or may be a preset value associated with different values of the yaw velocity, or may be an empirical value. An implementation of T0 is not limited in embodiments of this application. ΔT1 represents the first intervention value, and may be obtained through calculation according to the foregoing expression (6). ΔT2 represents the second intervention value, and may be obtained through calculation according to the foregoing expression (9).

2. Indirect calculation through table lookup is used as an example. The first traveling parameter may include the yaw velocity (for example, represented by x) and the speed (for example, represented by y) of the vehicle. The vehicle control apparatus may obtain, through querying according to the following Table 3, a first intervention value corresponding to (x, y), to calculate the first energy recovery torque based on the queried first intervention value.

**Table 3**

| y/x | 1 | 3 | 4 | 5 | 6 | 8 | 10 | 12 | 14 | 16 | 20 | 25 | 30 |
|-----|----|----|----|----|----|-----|-----|-----|-----|------|------|------|------|
| 20 | 0 | 0 | 0 | 0 | 0 | 200 | 300 | 300 | 400 | 500 | 500 | 500 | 500 |
| 40 | 10 | 10 | 10 | 10 | 10 | 310 | 410 | 410 | 510 | 610 | 710 | 760 | 810 |
| 60 | 20 | 20 | 20 | 20 | 20 | 420 | 520 | 520 | 620 | 720 | 920 | 1020 | 1120 |
| 80 | 30 | 30 | 30 | 30 | 30 | 430 | 530 | 530 | 630 | 830 | 1030 | 1030 | 1130 |
| 100 | 35 | 35 | 35 | 35 | 35 | 435 | 535 | 535 | 635 | 835 | 1035 | 1035 | 1235 |
| 120 | 40 | 40 | 240 | 240 | 240 | 640 | 740 | 740 | 840 | 1040 | 1040 | 1040 | 1240 |
| 140 | 45 | 45 | 245 | 245 | 245 | 645 | 745 | 745 | 845 | 1045 | 1045 | 1045 | 1245 |
| 160 | 50 | 50 | 250 | 250 | 250 | 650 | 750 | 750 | 850 | 1050 | 1050 | 1050 | 1250 |
| 180 | 50 | 50 | 250 | 250 | 250 | 650 | 750 | 750 | 850 | 1050 | 1050 | 1050 | 1250 |

In Table 2, values of x in the first row are values of the yaw velocity of the vehicle, and may be in a unit of (°/s). Values of y in the first column are values of the speed of the vehicle, and may be in a unit of km/h. The first intervention value may be a positive torque, and may be in a unit of N•M.

If the vehicle control apparatus already knows the value of the yaw velocity and the value of the speed through the sensing system or the computing capability of the vehicle control apparatus, the vehicle control apparatus may directly query the corresponding first intervention value from Table 3. The first intervention value may be substituted into the foregoing expression (5) or (10), to calculate the first energy recovery torque. Further, the vehicle control apparatus may control, based on the first energy recovery torque obtained through calculation, the vehicle to perform energy recovery.

In another possible implementation, the first traveling parameter may include the braking force request information (for example, represented by x) and the speed (for example, represented by y) of the vehicle. The vehicle control apparatus may query, according to the following Table 4, a first intervention value corresponding to (x, y), and calculate the first energy recovery torque based on the queried first intervention value.

**Table 4**

| x/y | 0 | 15 | 20 | 25 | 40 | 60 | 80 | 100 | 120 | 140 | 160 |
|---|---|---|---|---|---|---|---|---|---|---|---|
| 0 | 0 | 0 | 0 | 0 | 0 | 0 | 0 | 0 | 0 | 0 | 0 |
| 10 | 50 | 250 | 250 | 350 | 450 | 450 | 450 | 450 | 450 | 450 | 450 |
| 20 | 240 | 340 | 340 | 440 | 540 | 540 | 540 | 540 | 540 | 540 | 540 |
| 30 | 330 | 430 | 430 | 530 | 630 | 630 | 630 | 630 | 630 | 630 | 630 |
| 40 | 420 | 520 | 520 | 620 | 720 | 720 | 720 | 720 | 720 | 720 | 720 |
| 50 | 510 | 610 | 610 | 710 | 810 | 810 | 810 | 810 | 810 | 810 | 810 |
| 60 | 600 | 700 | 700 | 800 | 900 | 900 | 900 | 900 | 900 | 900 | 900 |
| 70 | 690 | 750 | 750 | 830 | 950 | 950 | 950 | 950 | 950 | 950 | 950 |
| 80 | 780 | 780 | 780 | 880 | 980 | 980 | 980 | 980 | 980 | 980 | 980 |
| 90 | 800 | 800 | 800 | 1000 | 1000 | 1000 | 1000 | 1000 | 1000 | 1000 | 1000 |
| 100 | 800 | 800 | 800 | 1000 | 1000 | 1000 | 1000 | 1000 | 1000 | 1000 | 1000 |

In Table 4, values of x in the first column represent the braking force request information of the vehicle, and is expressed as a percentage (%), indicating an extent to which a braking pedal is pressed (for example, manually or automatically), where 0 indicates that the braking pedal is not pressed, and 100 indicates that the braking pedal is fully pressed. Values of y in the first row are values of the speed of the vehicle, and may be in a unit of km/h. The first intervention value may be a positive torque, and may be in a unit of newton•meter (N•M).

If the vehicle control apparatus already knows the value of the braking force request information and the value of the speed through the sensing system or the computing capability of the vehicle control apparatus, the vehicle control apparatus may directly query the corresponding second intervention value from Table 4. The second intervention value may be substituted into the foregoing expression (8) or (10), to calculate the first energy recovery torque. Further, the vehicle control apparatus may control, based on the first energy recovery torque obtained through calculation, the vehicle to perform energy recovery.

It should be understood that, if the first traveling parameter includes the yaw velocity, the speed, and the braking force request information, Table 4 may be replaced with a table of correspondences between an intervention value and the yaw velocity, the speed, and the braking force request information. The intervention value is directly queried based on the yaw velocity, the speed, and the braking force request information, and the first energy recovery torque is calculated based on the queried intervention value. Details are not described herein again.

Similarly, in the indirect calculation method II, based on different vehicle components on which the first energy recovery torque acts, the vehicle control apparatus may further convert the queried intervention value, to calculate the first energy recovery torque. For example, if the preset T0 is an energy recovery torque configured for acting on a wheel end, an intervention value obtained in the manner shown in Table 3 or Table 4 may be directly used to calculate T1. If the preset T0 is an energy recovery torque configured for acting on a motor end (used to drive an axle), an intervention value obtained in the manner shown in Table 3 or Table 4 needs to be converted for use, for example, divided by a deceleration ratio. An implementation of the energy recovery process based on the first energy recovery torque is not limited in embodiments of this application.

So far, a method for calculating the first energy recovery torque in this embodiment of this application has been described by using the direct calculation method I and the indirect calculation method II. The calculation method can dynamically limit capability recovery intensity of the vehicle, to reduce or even avoid a tendency toward instability (for example, a sideslip or drift) when the vehicle performs energy recovery in some special scenarios (for example, a cornering scenario). This ensures traveling safety of the vehicle. In addition, based on the method, correction, performed by an ESC, triggered due to instability of the vehicle can be further reduced, to prevent the vehicle from "jerking forward", to ensure driving experience.

In this embodiment of this application, the vehicle control apparatus implements the foregoing dynamic energy recovery function, to ensure traveling safety of the vehicle on the basis of losing some recoverable energy, and cannot consider both safety (or driving experience) and energy recovery. In view of this, embodiments of this application further provide a dynamic allocation function. In some scenarios (for example, a four-wheel drive electric vehicle), the vehicle control apparatus may enable the dynamic allocation function, and allocate the energy recovery torque to different motors of the vehicle as required, so that the different motors separately bear some energy recovery capabilities, to optimize total energy recovery intensity of the vehicle as much as possible while the vehicle is prevented from showing the tendency toward instability, and traveling safety is ensured.

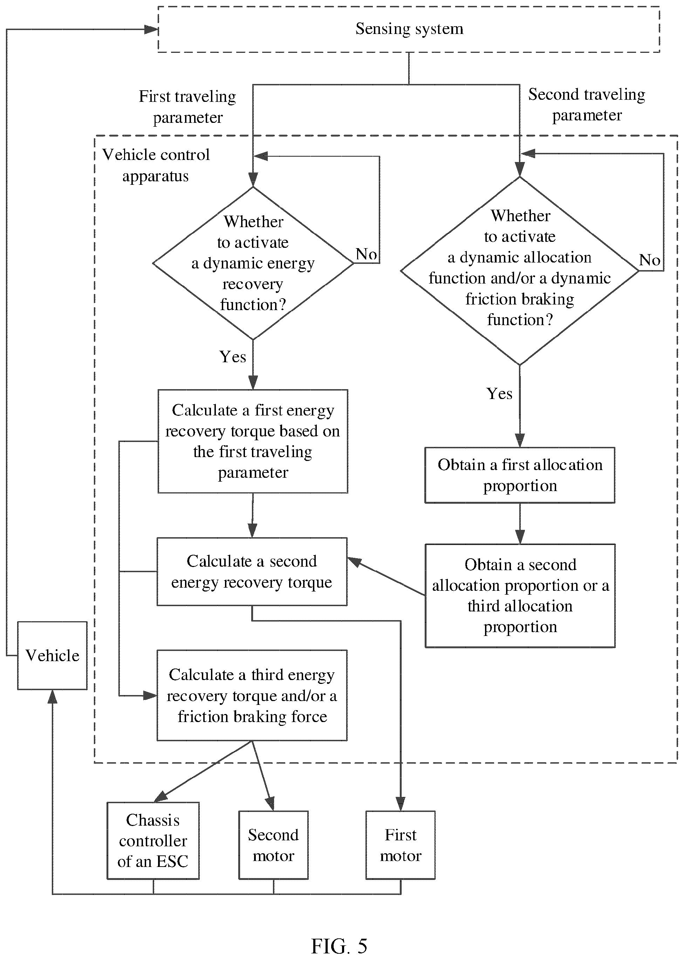

During specific implementation, as shown in FIG. 5, the dynamic allocation function may, for example, be associated with, a second traveling parameter. The vehicle control apparatus may obtain the second traveling parameter through the sensing system or the computing capability of the vehicle control apparatus, and may determine, based on the obtained second traveling parameter, whether to activate the dynamic allocation function. If it is determined, based on the second traveling parameter, that the vehicle meets a corresponding second activation condition, the dynamic allocation function may be activated. If the vehicle does not meet the corresponding second activation condition, the dynamic allocation function is not activated, but whether the second traveling parameter meets the corresponding second activation condition is monitored in real time. For example, the second traveling parameter may include the yaw velocity and/or the longitudinal acceleration. At least one second activation condition associated with the dynamic allocation function may include: The yaw velocity of the vehicle is greater than or equal to a fourth value; or the longitudinal acceleration of the vehicle is greater than or equal to a fifth value. The vehicle control apparatus may enable the dynamic allocation function when the obtained second traveling parameter meets the corresponding second activation condition.

Further, the vehicle control apparatus may obtain allocation proportions of energy recovery torques of the different motors of the vehicle based on the second traveling parameter of the vehicle, to allocate a total energy recovery torque (for example, the first energy recovery torque) to the different motors of the vehicle based on different allocation proportions.

For example, the vehicle control apparatus may preset a correspondence between the second traveling parameter and an allocation proportion of the energy recovery torque, and the vehicle control apparatus may obtain some or all of required allocation proportion information through table lookup.

For example, the vehicle is a four-wheel drive electric vehicle and is configured with a first motor and a second motor. A first allocation proportion associated with the first motor may be recorded in preset allocation proportion information. The vehicle control apparatus may query the first allocation proportion from the preset allocation proportion information based on the second traveling parameter of the vehicle, calculate, based on the total energy recovery torque and the first allocation proportion, an energy recovery torque (for example, denoted as a second energy recovery torque) allocated to the first motor, and calculate, based on the total energy recovery torque and a second allocation proportion, an energy recovery torque (for example, denoted as a third energy recovery torque) allocated to the second motor. The second allocation proportion is a difference between 1 and the first allocation proportion.

For example, the preset allocation proportion information may be shown as Table 5.

Table 5

| y/x | 1 | 3 | 4 | 5 | 6 | 8 | 10 | 12 | 14 | 16 | 20 | 25 | 30 | 40 |
|-----|-----|-----|-----|-----|-----|-----|-----|-----|-----|-----|-----|-----|-----|-----|
| 0.1 | 100 | 100 | 100 | 90 | 80 | 60 | 60 | 50 | 50 | 40 | 40 | 40 | 40 | 40 |
| 0.5 | 100 | 100 | 100 | 90 | 80 | 60 | 50 | 50 | 50 | 40 | 40 | 40 | 40 | 40 |
| 1 | 100 | 100 | 100 | 90 | 70 | 50 | 40 | 30 | 30 | 30 | 30 | 30 | 20 | 20 |
| 1.5 | 100 | 100 | 100 | 90 | 70 | 50 | 40 | 30 | 30 | 30 | 30 | 30 | 20 | 20 |
| 2.5 | 100 | 100 | 100 | 90 | 70 | 50 | 40 | 30 | 30 | 30 | 30 | 30 | 20 | 20 |
| 3 | 100 | 100 | 100 | 90 | 70 | 50 | 40 | 30 | 30 | 30 | 30 | 30 | 20 | 20 |
| 3.6 | 100 | 100 | 100 | 90 | 70 | 50 | 40 | 30 | 30 | 30 | 30 | 30 | 20 | 20 |
| 5 | 100 | 100 | 100 | 90 | 70 | 50 | 40 | 30 | 30 | 30 | 30 | 30 | 20 | 20 |
| 6 | 100 | 100 | 100 | 90 | 70 | 50 | 40 | 30 | 30 | 30 | 30 | 30 | 20 | 20 |

In Table 5, values of x in the first row are values of the yaw velocity, and may be in a unit of °/s. Values of y in the first column are absolute values of the longitudinal acceleration of the vehicle, and may be in a unit of $m/s^2$. The first allocation proportion is expressed as a percentage (%). When a value of the first allocation proportion is 100, it indicates that 100% (all) of the total energy recovery torque is allocated to the first motor. When the value of the first allocation proportion is 20, it indicates that 20% of the total energy recovery torque is allocated to the first motor, and the remaining 80% is allocated to the second motor.

In this way, according to the foregoing dynamic allocation function, in a traveling process of the vehicle, energy recovery torques allocated to the different motors of the vehicle may be dynamically adjusted based on a dynamic change of a value of the second traveling parameter, so that the different motors of the vehicle can perform energy recovery. This helps optimize total energy recovery intensity of the vehicle as much as possible while the vehicle is prevented from showing the tendency toward instability, and traveling safety is ensured. In addition, the vehicle responds based on different control policies, and feeds back a traveling status of the vehicle in real time through the sensing system, to implement a closed-loop adjustment policy.

It should be noted that the second traveling parameter is merely an example for description rather than any limitation. During actual application, the yaw velocity and/or the longitudinal acceleration in the second traveling parameter may be replaced with another traveling parameter. For example, the yaw velocity may be replaced with the heading angle of the vehicle, and the yaw velocity of the vehicle may be obtained by calculating a derivative of the heading angle of the vehicle. Alternatively, the yaw velocity may be indirectly reflected by using at least one of the following traveling parameters: a steering wheel angle, a lateral acceleration, or a roll angle. For example, the steering wheel angle, the lateral acceleration, or the roll angle may not be in an association relationship with the yaw velocity of the vehicle, but may reflect the yaw velocity to some extent, to indicate the yaw stability state of the vehicle. For example, the steering wheel angle, the lateral acceleration, or the roll angle may be in a linear or non-linear association relationship with the yaw velocity of the vehicle. The yaw velocity may be learned of based on the steering wheel angle, the lateral acceleration, or the roll angle, and association relationships between the yaw velocity and these traveling parameters, to indicate the yaw stability state of the vehicle. Similarly, the longitudinal acceleration may be replaced with any one of the following parameters: a change rate of a speed of the vehicle, a change rate of an axle speed of a front axle, or a change rate of an axle speed of a rear axle, and calculation can be performed based on a force applied to the vehicle, so that effect the same as or similar to effect of the longitudinal acceleration can also be achieved. Details are not described herein again.

In addition, due to a limitation of a vehicle component, in some scenarios (for example, a two-wheel drive electric vehicle that has only one rear-wheel drive motor), the vehicle control apparatus is not suitable to dynamically allocate energy recovery torques to different motors of the vehicle by using the foregoing dynamic allocation function, or the rear-wheel drive motor of the vehicle is not suitable to dynamically limit energy recovery intensity. In view of this, embodiments of this application further provide a dynamic friction braking function. The dynamic friction braking function may enable a front axle of the vehicle to generate a friction braking force. The friction braking force may be equal to the energy recovery torque allocated to the second motor in the foregoing solution of enabling the dynamic allocation function, so that vehicle stability can also be ensured in the two-wheel drive electric vehicle, and an objective the same as that of the dynamic energy recovery function or the dynamic allocation function described above is achieved. It should be understood that the two-wheel drive electric vehicle using the rear-wheel drive motor is merely used as an example for description herein. During actual application, if the two-wheel drive electric vehicle uses a front-wheel drive motor, the dynamic friction braking function may enable a rear axle of the vehicle to generate a friction braking force, so that a same objective can also be achieved in the two-wheel drive electric vehicle.

During specific implementation of the dynamic friction braking function, as shown in FIG. 5, refer to the dynamic allocation function. The vehicle control apparatus may calculate the friction braking force based on the total energy recovery torque (for example, the first energy recovery torque) and a third allocation proportion, and control pressure of a master cylinder or pressure of a wheel cylinder of the vehicle based on the friction braking force and by using the chassis controller of the ESC. The third allocation proportion is a difference between 1 and the first allocation proportion. For a manner of obtaining the first allocation proportion, refer to related descriptions about Table 5. Details are not described herein again.

It should be noted that, in this embodiment of this application, in a scenario of a four-wheel drive electric vehicle, the vehicle control apparatus may alternatively enable the dynamic friction braking function as required. A control solution based on the dynamic friction braking function may be used as an alternative solution to a control solution, based on the dynamic allocation function, of the four-wheel drive electric vehicle, or a control solution based on the dynamic friction braking function may be used as a supplementary control solution of the four-wheel drive electric vehicle. A manner of using these functions is not limited in embodiments of this application.

Therefore, the vehicle control apparatus can fully consider both traveling safety (or driving experience) of the vehicle and energy recovery as much as possible based on an actual component of the vehicle and by using the dynamic energy recovery function, the dynamic allocation function, and/or the dynamic friction braking function. In addition, the vehicle responds based on different control policies, and feeds back a traveling status of the vehicle in real time through the sensing system, to implement a closed-loop adjustment policy.

In addition, it should be noted that T0 described in the foregoing method in this embodiment of this application may be a preset value. However, during actual application, because a traveling environment of the vehicle is complex, preset information is not applicable in different cases, and expected dynamic control effect cannot be achieved. Therefore, in an alternative solution, T0 described in the foregoing embodiment may be obtained through direct or indirect calculation based on at least one actually collected traveling parameter.

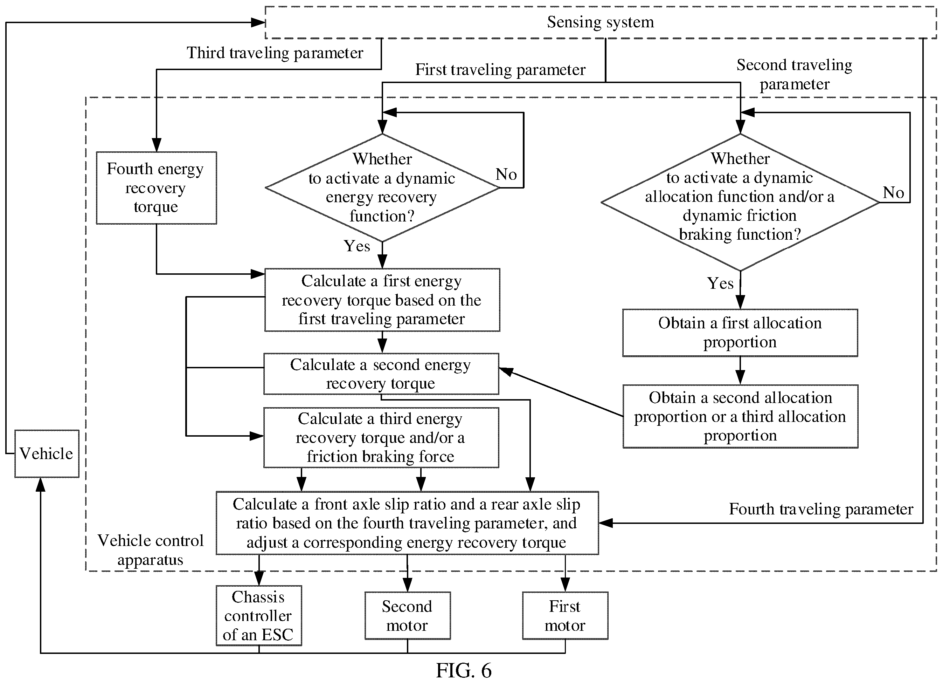

For example, a fourth energy recovery torque represents T0. As shown in FIG. 6, when the dynamic energy recovery function is enabled, the vehicle control apparatus may calculate the fourth energy recovery torque based on a third traveling parameter of the vehicle, and calculate the first energy recovery torque based on the first traveling parameter and the fourth energy recovery torque. For example, the third traveling parameter includes at least one of the following: accelerator pedal position percentage information, an SOC, the speed, a gear, a driving mode, or a road mode. For a subsequent control process, refer to the foregoing related descriptions of FIG. 4 or FIG. 5. Details are not described herein again.

It should be noted that, in this embodiment of this application, if the vehicle control apparatus enables the dynamic energy recovery function, the dynamic allocation function, and/or the dynamic friction braking function, the vehicle control apparatus may calculate a to-be-output energy recovery torque (for example, including the first energy recovery torque, the second energy recovery torque, or the third energy recovery torque) by using the foregoing method, and control the vehicle. If a related traveling parameter does not reach a set threshold, and the vehicle control apparatus does not enable the dynamic energy recovery function, the dynamic allocation function, and/or the dynamic friction braking function, the vehicle control apparatus may use, as an output, the fourth energy recovery torque obtained through calculation based on the third traveling parameter, to perform energy recovery on the vehicle. Details are not described herein again.

In addition, during actual application, a road surface environment of a road on which the vehicle is located may affect traveling safety of the vehicle and energy recovery. In view of this, in a possible implementation, after obtaining a to-be-output first energy recovery torque, a to-be-output second energy recovery torque, a to-be-output third energy recovery torque, or a friction braking force through calculation based on the foregoing descriptions, the vehicle control apparatus may calculate a front axle slip ratio and a rear axle slip ratio based on a fourth traveling parameter, and adjust the to-be-output first energy recovery torque, the to-be-output second energy recovery torque, the to-be-output third energy recovery torque, or the friction braking force based on the calculated front axle slip ratio, the calculated rear axle slip ratio, and a calculated boundary value of a target slip ratio.

For example, the fourth traveling parameter may include at least one of the following: a wheel speed, the speed, or an axle speed. The vehicle control apparatus may determine the boundary value of the target slip ratio based on a road surface type of a road on which the vehicle is located. If the front axle slip ratio obtained through calculation is greater than the boundary value of the target slip ratio, energy recovery intensity of the front axle may be appropriately reduced. For example, an energy recovery torque to be provided to a motor (for example, the second motor) of the front axle is reduced, or a friction braking force to be provided to the front axle is reduced. If the rear axle slip ratio obtained through calculation is greater than the boundary value of the target slip ratio, energy recovery intensity of the rear axle may be appropriately reduced. For example, an energy recovery torque to be provided to a motor (for example, the first motor) of the rear axle is reduced, or a friction braking force to be provided to the rear axle is reduced. A manner of calculating the front axle slip ratio or the rear axle slip ratio is not described herein again.

Therefore, according to the foregoing method, the energy recovery intensity of the front axle or the rear axle of the vehicle is dynamically modified based on the slip ratio, to prevent the vehicle from showing the tendency toward instability caused by an increase in an axle (for example, the rear axle) slip ratio.

So far, the vehicle control method in this application has been described with reference to the foregoing method embodiment. In the method, the vehicle control apparatus may be configured with the dynamic energy recovery function, the dynamic allocation function, and/or the dynamic friction braking function. The vehicle control apparatus may obtain at least one traveling parameter of the vehicle through the sensing system of the vehicle, and keep monitoring and collecting running data of the vehicle at all times. The vehicle control apparatus may determine whether a related traveling parameter meets an activation condition of each dynamic control function. If the related traveling parameter meets the activation condition of each dynamic control function, the vehicle control apparatus may activate a corresponding function, and implement the vehicle control method in this embodiment of this application by using each dynamic control function, to dynamically limit capability recovery intensity of a vehicle component, to reduce or even avoid a tendency toward instability (for example, a sideslip or drift) when the vehicle performs energy recovery in some special scenarios (for example, a cornering scenario). This ensures traveling safety of the vehicle. Further, the dynamic allocation function and/or the dynamic friction braking function are/is enabled as required based on different components of different vehicles, and energy recovery torques are allocated to different motors of the vehicle as required, so that the different motors separately bear some energy recovery capabilities, to optimize total energy recovery intensity of the vehicle as much as possible while the vehicle is prevented from showing the tendency toward instability, and traveling safety is ensured. A same objective can also be achieved by using the dynamic friction braking function. In addition, based on the method, correction, performed by an ESC, triggered due to instability of the vehicle can be further reduced, to prevent the vehicle from "jerking forward", to ensure driving experience.

It should be noted that in the foregoing method embodiment of this application, only an example in which the VCU or the VDC is used as the vehicle control apparatus is used for description, and a product form of the vehicle control apparatus is not limited. In some embodiments, because a computing function of a cloud server is more powerful, the vehicle control apparatus may alternatively be configured in the cloud server. The cloud server may obtain at least one traveling parameter from the sensing system of the vehicle by using a communication network, and after obtaining, through calculation, energy recovery torques or friction braking forces of different control components to be provided to the vehicle, send the energy recovery torques or the friction braking forces of the control components to the vehicle by using the communication network, to control the vehicle. Details are not described herein again.

An embodiment of this application further provides a vehicle control apparatus. The vehicle control apparatus may be configured to perform the foregoing method embodiment. For related features, refer to the foregoing method embodiment. Details are not described herein again.

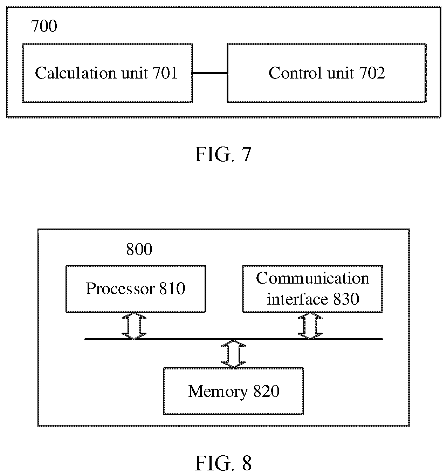

As shown in FIG. 7, in an example, the vehicle control apparatus 700 may include: a calculation unit 701, configured to calculate a first energy recovery torque based on a first traveling parameter of a vehicle, where the first traveling parameter includes a yaw velocity; and a control unit 702, configured to control, based on the first energy recovery torque, the vehicle to perform energy recovery. For a specific implementation, refer to the method steps implemented by the vehicle control apparatus in the foregoing method embodiment. Details are not described herein again.

It should be understood that division of units of the apparatus is merely logical function division. During actual implementation, all or some of the units may be integrated into one physical entity or may be physically separated. In addition, the unit of the apparatus may be implemented in a form of software invoked by a processor. For example, the apparatus includes a processor. The processor is connected to a memory. The memory stores instructions. The processor invokes the instructions stored in the memory, to implement any one of the foregoing methods or functions of units in the apparatus. The processor is, for example, a general-purpose processor, for example, a central processing unit (Central Processing Unit, CPU) or a microprocessor. The memory is a memory in the apparatus or a memory outside the apparatus. Alternatively, the unit of the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (Field Programmable Gate Array, FPGA) is used as an example. The field programmable gate array may include a large quantity of logic gate circuits, and a connection relationship between the logic gate circuits is configured by using a configuration file, to implement the functions of some or all of the units. All the units of the apparatus may be implemented in a form of software invoked by a processor, or may be implemented in a form of a hardware circuit, or some of the units are implemented in a form of software invoked by a processor, and the remaining units are implemented in a form of a hardware circuit.

In this embodiment of this application, the processor is a circuit having a signal processing capability. In an implementation, the processor may be a circuit having an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an ASIC or a PLD, for example, an FPGA. In the reconfigurable hardware circuit, a process in which the processor loads a configuration document to configure the hardware circuit may be understood as a process in which the processor loads instructions to implement the functions of some or all of the units. In addition, the processor may be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units of the apparatus may be configured as one or more processors (or processing circuits) for implementing the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, and a CPU and a GPU.

In a simple embodiment, a person skilled in the art may figure out that the vehicle control apparatus in the foregoing embodiment may be in a form shown in FIG. 8.

An apparatus 800 shown in FIG. 8 includes at least one processor 810 and a communication interface 830. In an optional design, the apparatus 800 may further include a memory 820.

A specific connection medium between the processor 810 and the memory 820 is not limited in embodiments of this application.

In the apparatus shown in FIG. 8, when communicating with another device, the processor 810 may transmit data through the communication interface 830.

When the vehicle control apparatus is in a form shown in FIG. 8, the processor 810 in FIG. 8 may invoke computer-executable instructions stored in the memory 820, so that the apparatus 800 can perform any one of the foregoing method embodiments.

An embodiment of this application further relates to a chip system. The chip system includes a processor, configured to invoke a computer program or computer instructions stored in a memory, to enable the processor to perform the method in any one of the foregoing embodiments.

In a possible implementation, the processor is coupled to the memory through an interface.

In a possible implementation, the chip system may alternatively include a memory directly. The memory stores a computer program or computer instructions.

For example, the memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, to enable the processor to perform the method in any one of the foregoing embodiments.

For example, in this embodiment of this application, the processor is an integrated circuit chip, and has a signal processing capability. For example, the processor may be an FPGA, may be a general-purpose processor, a DSP, an ASIC, or another programmable logic device, a discrete gate, a transistor logic device, or a discrete hardware component, or may be a system-on-a-chip (system-on-a-chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. Steps of the method disclosed with reference to embodiments of this application may be directly performed and completed by a hardware decoding processor, or may be performed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiment.

In a possible implementation, an embodiment of this application provides a computer program product. When the computer program product runs on a computer, the computer is enabled to perform the foregoing method embodiment.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of the claims of this application and equivalent technologies thereof. In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

**Claims**

1.  A vehicle control method, comprising:

    calculating a first energy recovery torque based on a first traveling parameter of a vehicle, wherein the first traveling parameter comprises a yaw velocity; and
    controlling, based on the first energy recovery torque, the vehicle to perform energy recovery.

2.  The method according to claim 1, wherein the method further comprises:
    determining that the vehicle meets at least one of the following first activation conditions:

    the yaw velocity of the vehicle is greater than or equal to a first value;
    a speed of the vehicle is greater than or equal to a second value; or
    a value of braking force request information of the vehicle is greater than or equal to a third value.

3.  The method according to claim 1 or 2, wherein the first traveling parameter comprises the speed, and the calculating a first energy recovery torque based on a first traveling parameter of a vehicle comprises:

    calculating a first intervention value based on the yaw velocity and the speed; and
    calculating the first energy recovery torque based on the first intervention value.

4.  The method according to claim 3, wherein the first traveling parameter comprises the braking force request information, and the calculating a first energy recovery torque based on a first traveling parameter of a vehicle comprises:

    calculating a second intervention value based on the braking force request information and the speed; and
    calculating the first energy recovery torque based on the second intervention value.

5.  The method according to claim 4, wherein the calculating a first energy recovery torque based on a first traveling parameter of a vehicle comprises:
    calculating the first energy recovery torque based on a larger value between the first intervention value and the second intervention value.

6.  The method according to any one of claims 1 to 5, wherein the method further comprises:

    obtaining a first allocation proportion of an energy recovery torque; and
    the controlling, based on the first energy recovery torque, the vehicle to perform energy recovery comprises:

    calculating a second energy recovery torque based on the first energy recovery torque and the first allocation proportion; and
    controlling, based on the second energy recovery torque, a first motor of the vehicle to perform energy recovery.

7.  The method according to claim 6, wherein the method further comprises:

    calculating a third energy recovery torque based on the first energy recovery torque and a second allocation proportion, wherein the second allocation proportion is a difference between 1 and the first allocation proportion; and
    controlling, based on the third energy recovery torque, a second motor of the vehicle to perform energy recovery.

8.  The method according to claim 6 or 7, wherein the method further comprises:

calculating a friction braking force based on the first energy recovery torque and a third allocation proportion, wherein the third allocation proportion is a difference between 1 and the first allocation proportion; and controlling pressure of a master cylinder or pressure of a wheel cylinder of the vehicle based on the friction braking force.

9. The method according to any one of claims 6 to 8, wherein the obtaining a first allocation proportion of an energy recovery torque comprises:
querying the first allocation proportion from preset allocation proportion information based on a second traveling parameter of the vehicle, wherein the second traveling parameter comprises the yaw velocity and/or a longitudinal acceleration.

10. The method according to claim 9, wherein the method further comprises:
determining that the vehicle meets at least one of the following second activation conditions:

the yaw velocity of the vehicle is greater than or equal to a fourth value; or
the longitudinal acceleration of the vehicle is greater than or equal to a fifth value.

11. The method according to any one of claims 1 to 10, wherein the method further comprises:

when an energy recovery function is enabled, calculating a fourth energy recovery torque based on a third traveling parameter of the vehicle, wherein the third traveling parameter comprises at least one of the following: accelerator pedal position percentage information, a state of charge SOC of a battery, the speed, a gear, a driving mode, or a road mode; and
the calculating a first energy recovery torque based on a first traveling parameter of a vehicle comprises:
calculating the first energy recovery torque based on the first traveling parameter and the fourth energy recovery torque.

12. The method according to any one of claims 1 to 11, wherein the method further comprises:

calculating a front axle slip ratio and a rear axle slip ratio based on a fourth traveling parameter of the vehicle, wherein the fourth traveling parameter comprises at least one of the following: a wheel speed, the speed, or an axle speed; and
adjusting the first energy recovery torque based on the front axle slip ratio, the rear axle slip ratio, and a boundary value of a target slip ratio.

13. The method according to claim 12, wherein the method further comprises:
determining the boundary value of the target slip ratio based on a road surface type of a road on which the vehicle is located.

14. A vehicle control apparatus, comprising:

a calculation unit, configured to calculate a first energy recovery torque based on a first traveling parameter of a vehicle, wherein the first traveling parameter comprises a yaw velocity; and
a control unit, configured to control, based on the first energy recovery torque, the vehicle to perform energy recovery.

15. The apparatus according to claim 14, further comprising a determining unit, configured to determine that the vehicle meets at least one of the following first activation conditions:

the yaw velocity of the vehicle is greater than or equal to a first value;
a speed of the vehicle is greater than or equal to a second value; or
a value of braking force request information of the vehicle is greater than or equal to a third value.

16. The apparatus according to claim 14 or 15, wherein the first traveling parameter comprises the speed, and the calculation unit is specifically configured to:

calculate a first intervention value based on the yaw velocity and the speed; and
calculate the first energy recovery torque based on the first intervention value.

17. The apparatus according to claim 16, wherein the first traveling parameter comprises the braking force request information, and the calculation unit is specifically configured to:

> calculate a second intervention value based on the braking force request information and the speed; and
> calculate the first energy recovery torque based on the second intervention value.

18. The apparatus according to claim 17, wherein the calculation unit is specifically configured to:
calculate the first energy recovery torque based on a larger value between the first intervention value and the second intervention value.

19. The apparatus according to any one of claims 14 to 18, wherein the apparatus further comprises:

> an obtaining unit, configured to obtain a first allocation proportion of an energy recovery torque, wherein the control unit is specifically configured to:

>> calculate a second energy recovery torque based on the first energy recovery torque and the first allocation proportion by using the calculation unit; and
>> control, based on the second energy recovery torque, a first motor of the vehicle to perform energy recovery.

20. The apparatus according to claim 19, wherein the control unit is further configured to:

> calculate a third energy recovery torque based on the first energy recovery torque and a second allocation proportion by using the calculation unit, wherein the second allocation proportion is a difference between 1 and the first allocation proportion; and
> control, based on the third energy recovery torque, a second motor of the vehicle to perform energy recovery.

21. The apparatus according to claim 19 or 20, wherein the control unit is further configured to:

> calculate a friction braking force based on the first energy recovery torque and a third allocation proportion by using the calculation unit, wherein the third allocation proportion is a difference between 1 and the first allocation proportion; and
> control pressure of a master cylinder or pressure of a wheel cylinder of the vehicle based on the friction braking force.

22. The apparatus according to any one of claims 19 to 21, wherein the obtaining unit is specifically configured to:
query the first allocation proportion from preset allocation proportion information based on a second traveling parameter of the vehicle, wherein the second traveling parameter comprises the yaw velocity and/or a longitudinal acceleration.

23. The apparatus according to claim 22, wherein the apparatus further comprises a determining unit, configured to determine that the vehicle meets at least one of the following second activation conditions:

> the yaw velocity of the vehicle is greater than or equal to a fourth value; or
> the longitudinal acceleration of the vehicle is greater than or equal to a fifth value.

24. The apparatus according to any one of claims 14 to 23, wherein the calculation unit is further configured to:

> when an energy recovery function is enabled, calculate a fourth energy recovery torque based on a third traveling parameter of the vehicle, wherein the third traveling parameter comprises at least one of the following: accelerator pedal position percentage information, a state of charge SOC of a battery, the speed, a gear, a driving mode, or a road mode; and
> that the calculation unit calculates a first energy recovery torque based on a first traveling parameter of a vehicle comprises:
> calculating the first energy recovery torque based on the first traveling parameter and the fourth energy recovery torque.

25. The apparatus according to any one of claims 14 to 24, wherein the calculation unit is further configured to:

calculate a front axle slip ratio and a rear axle slip ratio based on a fourth traveling parameter of the vehicle, wherein the fourth traveling parameter comprises at least one of the following: a wheel speed, the speed, or an axle speed; and

adjust the first energy recovery torque based on the front axle slip ratio, the rear axle slip ratio, and a boundary value of a target slip ratio.

26. The apparatus according to claim 25, wherein the apparatus further comprises:
a determining unit, configured to determine the boundary value of the target slip ratio based on a road surface type of a road on which the vehicle is located.

27. A terminal device, comprising a processor, wherein the processor is coupled to a memory; and
the processor is configured to execute a computer program or instructions stored in the memory, to enable the terminal device to perform the method according to any one of claims 1 to 13.

28. A vehicle, comprising a unit configured to implement the method according to any one of claims 1 to 13.

29. A readable storage medium, comprising a program or instructions, wherein when the program or the instructions are executed, the method according to any one of claims 1 to 13 is performed.

30. A computer program product, wherein when the computer program product runs on a computer, the computer is enabled to perform the method according to any one of claims 1 to 13.

FIG. 1

Sensing system

Speed sensor

Acceleration sensor

Angular velocity sensor

Roll angle sensor

Steering wheel sensor

VCU/VDC

Vehicle control and decision

In-vehicle communication network (gateway)

Peripheral device

First motor

Second motor

Chassis controller of an ESC

FIG. 2

Vehicle control apparatus

Sensing system

First traveling parameter

S310: Calculate a first energy recovery torque based on the first traveling parameter of a vehicle

S320: Control, based on the first energy recovery torque, the vehicle to perform energy recovery

FIG. 3

FIG. 4

FIG. 5

Sensing system

Third traveling parameter

First traveling parameter

Second traveling parameter

Fourth energy recovery torque

Whether to activate a dynamic energy recovery function? — No

Whether to activate a dynamic allocation function and/or a dynamic friction braking function? — No

Yes

Calculate a first energy recovery torque based on the first traveling parameter

Calculate a second energy recovery torque

Calculate a third energy recovery torque and/or a friction braking force

Yes

Obtain a first allocation proportion

Obtain a second allocation proportion or a third allocation proportion

Calculate a front axle slip ratio and a rear axle slip ratio based on the fourth traveling parameter, and adjust a corresponding energy recovery torque

Fourth traveling parameter

Vehicle control apparatus

Vehicle

Chassis controller of an ESC

Second motor

First motor

FIG. 6

28

700

Calculation unit 701 — Control unit 702

FIG. 7

800

Processor 810

Communication interface 830

Memory 820

FIG. 8

## INTERNATIONAL SEARCH REPORT

| International application No. |
|---|
| **PCT/CN2022/123047** |

### A. CLASSIFICATION OF SUBJECT MATTER

B60L 7/10(2006.01)i; B60T 1/10(2006.01)i

According to International Patent Classification (IPC) or to both national classification and IPC

### B. FIELDS SEARCHED

Minimum documentation searched (classification system followed by classification symbols)

B60L; B60T

Documentation searched other than minimum documentation to the extent that such documents are included in the fields searched

Electronic data base consulted during the international search (name of data base and, where practicable, search terms used)

CNABS; CNTXT; VEN; DWPI; WOTXT; EPTXT; USTXT; CNKI; IEEE: 能量, 回收, 扭矩, 横摆角速度, 横摆, 系数, 比例, 干预, 分配, 第一电机, 第二电机, energy, recovery, torque, yaw, first motor, second motor, ratio, coefficient, yaw velocity, slip, friction

### C. DOCUMENTS CONSIDERED TO BE RELEVANT

| Category* | Citation of document, with indication, where appropriate, of the relevant passages | Relevant to claim No. |
|---|---|---|
| X | CN 111645684 A (BEIQI FOTON MOTOR CO., LTD.) 11 September 2020 (2020-09-11) description, paragraphs [0055]-[0095], and figures 1-6 | 1-30 |
| X | CN 113492682 A (GREAT WALL MOTOR CO., LTD.) 12 October 2021 (2021-10-12) description, paragraphs [0065]-[0174], and figures 1-7 | 1-30 |
| X | CN 114940161 A (GUANGZHOU AUTOMOBILE GROUP CO., LTD.) 26 August 2022 (2022-08-26) description, paragraphs [0024]-[0045], and figures 1-2 | 1-30 |
| A | CN 111409466 A (WEICHAI POWER CO., LTD.) 14 July 2020 (2020-07-14) entire document | 1-30 |
| A | CN 108515964 A (GEELY AUTOMOBILE RESEARCH INSTITUTE (NINGBO) CO., LTD. et al.) 11 September 2018 (2018-09-11) entire document | 1-30 |
| A | CN 108327577 A (BEIJING ELECTRIC VEHICLE CO., LTD.) 27 July 2018 (2018-07-27) entire document | 1-30 |
| A | EP 2676831 A1 (PIONEER CORP.) 25 December 2013 (2013-12-25) entire document | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2022** | **08 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/123047**

| Patent document cited in search report | | | Publication date (day/month/year) | Patent family member(s) | | | Publication date (day/month/year) |
|---|---|---|---|---|---|---|---|
| CN | 111645684 | A | 11 September 2020 | CN | 111645684 | B | 17 September 2021 |
| CN | 113492682 | A | 12 October 2021 | WO | 2021197441 | A1 | 07 October 2021 |
| CN | 114940161 | A | 26 August 2022 | | None | | |
| CN | 111409466 | A | 14 July 2020 | CN | 111409466 | B | 26 April 2022 |
| CN | 108515964 | A | 11 September 2018 | CN | 108515964 | B | 08 September 2020 |
| CN | 108327577 | A | 27 July 2018 | CN | 108327577 | B | 28 July 2020 |
| EP | 2676831 | A1 | 25 December 2013 | US | 2014067181 | A1 | 06 March 2014 |
| | | | | WO | 2012111159 | A1 | 23 August 2012 |
| | | | | JP | 5096636 | B1 | 12 December 2012 |
| | | | | US | 8935032 | B2 | 13 January 2015 |
| | | | | EP | 2676831 | A4 | 17 February 2016 |
| | | | | JPWO | 2012111159 | A1 | 03 July 2014 |

Form PCT/ISA/210 (patent family annex) (January 2015)